# EUROPÄISCHE PATENTANMELDUNG

(11) **EP 1 584 901 A1**
(43) Veröffentlichungstag der Anmeldung: **12.10.2005**
(21) Anmeldenummer: 04008588.8
(22) Anmeldetag: 08.04.2004
(51) Int. Cl.: G01D 7/08, B62D 1/04, B60Q 9/00, G08B 7/00

(54) **Vorrichtung zur dynamischen optischen, akustischen oder haptischen Darstellung der Umgebung eines Fahrzeuges**

(71) Anmelder: Sassin, Wolfgang, Dr., 52441 Linnich (DE)
(72) Erfinder: Sassin, Wolfgang, Dr., 52441 Linnich (DE)
(74) Vertreter: Baum, Wolfgang

(57) **Zusammenfassung**

Einrichtung zur Repräsentation eines zeitlich und räumlich variierenden Gefahrenpotentials für den ein technisches Gerät oder eine Maschine bedienenden Operator, insbesondere für den Führer eines Kraftfahrzeugs, bei der Messgrö0en (M1 - Mn) von physikalischen Parametern (A) (Schall, Bewegungsgröße, Leuchtstärke) eines außerhalb des aktuellen Aufmerksamkeitsbereiches des Operators auftretenden Gefahrenpotentials erfasst werden, verarbeitet werden zu Wahrnehmbarkeitssignalen (optisch, akustisch, tonisch) welche als Alertsignal zur Lenkung der Aufmerksamkeit des Operators (O) in Richtung des Gefahrenpotentials geeignet sind und die Wahrnehmbarkeitssignale in die Nähe oder an den Rand des Aufmerksamkeitsfeldes (AF) des Operators O) unter vorgebbarer Veränderung ihrer realen räumlichen und/oder zeitlichen Position transferiert werden.

## Beschreibung

Die Erfindung bezieht sich auf eine Einrichtung zur Repräsentation eines zeitlich und räumlich variierenden Gefahrenpotentials für den ein technisches Gerät oder eine Maschine bedienenden Operator, insbesondere für den Führer eines Kraftfahrzeugs.

Es ist bekannt, die Repräsentation von Gefahrenpotentialen für Operatoren in der Weise zu praktizieren, dass vorverarbeitete Informationen aus dem einer komplexen dynamischen Umgebung entnehmbaren Informationsstrom dem Operator (Führer oder Bediener) übermittelt werden, damit dieser eigene Handlungen herbeiführt, koordiniert und steuernd auf das zu bedienende technische Gerät oder die Maschine einwirkt. Beispiele hierfür sind die Instrumentierungen und entsprechende Steuerungs- bzw. Bedienungselemente in Fahrzeugen, die dem Fahrzeugführer Kenngrößen des Fahrzeugs selbst aber auch solche aus der komplexen dynamischen Umgebung des Fahrzeugs vermitteln. Eine Einrichtung der vorbezeichneten Art ist aus der deutschen Offenlegungsschrift DE 195 39 799 A1 bekannt. Dieses Dokument beschreibt eine Informationseinrichtung für Kraftfahrzeuge mit einer Verarbeitungseinrichtung, die anzeigbare Informationssignale in Form von Symbolen in Abhängigkeit von Sensoren erfasst und in Form des klassischen Instrumentenverständnisses dem Fahrer auf dem Anzeigefeld seiner Fahrzeuginstrumente darstellt.. Der Fahrer muss die in Form von Bildern oder Skalenwerten angegebenen Informationen gedanklich auswerten und aus diesem Ergebnis entsprechende Handlungen bezüglich der Bedienung des Kraftfahrzeugs ableiten. Je mannigfaltiger sich die in der Praxis vorkommenden Gefahrenpotentiale gestalten, desto schwieriger wird es, sie einem Operator zu vermitteln, ohne diesen durch zu komplexe Informationsvermittlung zu überfordern, d. h. Informationen zu vermitteln, die vom Operator nicht mehr aufgenommen oder zumindest nicht mehr zeitgerecht und fehlerfrei in geeignete Handlungen zur Steuerung des zu bedienenden technischen Gerätes oder der Maschine umgesetzt werden können.

Um die informationelle Belastung von Operatoren zu begrenzen, ist es bisher bekannt, funktionell zusammenhängende Signale zu bündeln, so dass möglichst "mit einem Blick" die Gesamtheit der zu vermittelnden Information erfassbar wird und entsprechend gehandelt werden kann. Eine weitere bekannte Methode zur Vermittlung eines hohen Informationspotentials ist die Repräsentation von Informationen, abhängig von deren Relevanz durch raum- bzw. perspektivenbezogene Differenzierung, also durch geeignete Wahl von Darstellungsgrößen, Darstellungsintensität und Platzierung im Aufmerksamkeitsfeld des Operators. Schließlich ist es auch bekannt, Symbole zu verwenden, um Informationen zu vereinfachen und leichter wahrnehmbar zu machen. Mit den vorgenannten bekannten Methoden und entsprechend angepassten Einrichtungen wird versucht, die Nutzung der beschränkten menschlichen Informationsaufnahme und Verarbeitungskapazität zu optimieren.

Aus der europäischen Patentanmeldung mit der Veröffentlichungsnummer 0686 865 A1 ist ein Nachtsichtsystem für Kraftfahrzeuge bekannt, bei dem im Sichtbereich des Fahrers liegende Hindernisse, die er aufgrund begrenzter Wahrnehmungsfähigkeit des menschlichen Auges noch nicht erkennen kann, mit Hilfe von Infrarotkameras erfasst werden und auf ein Head-up-Display in sein Sichtfeld eingespiegelt werden. Der Fahrer bzw. Betrachter erkennt also bewusst, um welches Objekt bzw. Gefahr es sich handelt, muss aber gleichzeitig seine Aufmerksamkeit zum einen dem realen Verkehrsgeschehen widmen und zum andern der eingespiegelten Information auf dem Head-up-Display. Für ein Gefahrenpotential, das nicht oder noch nicht zu einer Gefährdung führt, wird diese Art der Zusatzinformation zumindest zeitweise eine unerwünschte Überforderung für den Fahrer darstellen.

Aus der deutschen Offenlegungsschrift DE 100 30 421 A1 ist ein ähnliches Fahrzeugumgebungsüberwachungssystem für Kraftfahrzeuge bekannt, das geeignet ist, genau die Bewegung eines in einer Umgebung des Fahrzeugs vorhandenen Objekts zu erfassen und die Möglichkeit für eine Kollision zwischen diesem Objekt und dem Fahrzeug exakt zu bestimmen und den Fahrer zu warnen. Dieses vorbekannte System verbessert die Situation für den Fahrer gegenüber dem System nach der zuvor genannten europäischen Patentanmeldung dadurch, dass es die Warnung an den Fahrer nur dann abgibt, wenn das System selbst, allerdings mit erheblichem Geräte- und Rechenaufwand ermittelt hat, dass das Gefahrenpotential zur unmittelbaren Gefahr, nämlich einer Kollision wird. In diesem Fall wird dann die Gefahr wiederum mittels eines Head-up-Displays in das direkte Sichtfeld des Fahrers eingespiegelt.

Ein anderer Lösungsansatz um ein hohes variierendes Gefahrenpotential bei der Bedienung oder Steuerung eines technischen Geräts oder einer Maschine für den Operator beherrschbar zu machen, besteht darin, dass man die Intensität des Gefahrenpotentials durch einen automatisch ablaufenden Vergleich von physikalischen Größen in einem Steuerungsmechanismus durchführt. Ein solches System ist durch die deutsche Offenlegungsschrift DE 100 05 867 A1 bekannt. Die bekannten halb- oder vollautomatischen Steuerungsmechanismen bergen jedoch den Nachteil in sich, dass der Operator die Sensitivität für die Bedienung des technischen Geräts oder der Maschine verliert und dadurch neue Gefahren heraufbeschworen werden; dies trifft besonders dann zu, wenn sich die automatische Steuerung physikalischen Grenzwerten annähert, die nicht mehr beherrschbar sind. Außerdem kann durch solche Systeme möglicherweise die Aufmerksamkeit des Operators oder Fahrers gerade in kritischen Situationen zu sehr in Anspruch genommen oder sogar gespalten werden.

Aufgabe der vorliegenden Erfindung ist es deshalb, die Aufmerksamkeit eines Operators auf nicht oder noch nicht erkennbare, außerhalb seines aktuellen Aufmerksamkeitsbereiches auftretende Gefahrenpotentiale zu lenken und zwar in der Weise, dass dadurch das bewusst zu beeinflussende Operationsfeld des Operators nicht in Anspruch genommen wird. Dabei soll der gerätetechnische Aufwand in Grenzen gehalten werden, um die Anwendung auch bei einfacheren technischen Geräten oder bei Kraftfahrzeugen betriebwirtschaftlich vertretbar zu machen.

Erfindungsgemäß wird die gestellte Aufgabe dadurch gelöst, dass eine Einrichtung nach dem Oberbegriff des Patentanspruchs 1 die folgenden Merkmale aufweist:
a) es werden Messgrößen von physikalischen Parametern eines außerhalb des aktuellen Aufmerksamkeitsbereiches des Operators auftretenden Gefahrenpotentials erfasst,
b) diese Messgrößen werden verarbeitet zu Wahrnehmbarkeitssignalen (optisch, akustisch, tonisch), welche als Alert-Signal zur Lenkung derAufmerksamkeit des Operators in Richtung des Gefahrenpotentials geeignet sind,
c) Die Wahrnehmbarkeitssignale werden in die Nähe oder an den Rand des Aufmerksamkeitsfeldes des Operators unter vorgebbarer Veränderung ihrer realen räumlichen und/oder zeitlichen Position transferiert.

Der Hauptvorteil einer erfindungsgemäßen Einrichtung besteht darin, dass Informationen über Gefahrenpotentiale dem Operator vermittelt werden ohne dass die Informationen in Form konkreter Anzeigen die bewusste Aufmerksamkeit des Operators auf sich ziehen und damit dessen Aufmerksamkeit von anderen Priorität verlangenden Informationsquellen ablenken. Die Aufmerksamkeit des Operators wird also im Bereich des primären Zielobjekts gehalten und lediglich durch die latente Repräsentation zusätzlicher Gefahrenpotentiale in Form von zusätzlicher latenter Information ergänzt, wobei je nach Gestaltung der latenten Informationssignale der Grad der angezogenen Aufmerksamkeit einstellbar ist. Dabei kann die Gestaltung der Informationssignale den individuellen Aufmerksamkeitsfähigkeiten des Operators angepasst werden.

Aus der deutschen Offenlegungsschrift DE 100 30 813 A1 ist ein Verfahren zur Aufmerksamkeitssteuerung eines Bedieners einer technischen Einrichtung bekannt. Dort wird gelehrt, eine Anzeigevorrichtung zur Anzeige von handlungsrelevanten Informationen in Form von Bildern oder Symbolen zu realisieren, bei welcher die Dauer der Anzeige des jeweiligen Bildes oder Symbols unterhalb einer bewussten und oberhalb einer unbewussten Wahrnehmungsschwelle des Bedieners liegt. Insoweit wird eine der hier gestellten Aufgabe ähnliche Zielsetzung ins Auge gefasst. Im Gegensatz zu der erfindungsgemäßen Lösung wird nach der vorgenanten Druckschrift aber gelehrt, das jeweilige Bild oder Symbol, welches aus der weiterzuleitenden Information gebildet wird, an den Stellen des Sichtfeldes des Bedieners anzuzeigen, an welchem sich Objekte befinden auf welche aufmerksam gemacht werden soll. Obwohl die Problematik, die darin besteht, dass bei herkömmlich bekannten Warneinrichtungen, insbesondere dann, wenn sie eine intellektuelle Wertung von im Sichtfeld des Operators angezeigten Bildern oder Symbolen verlangen, die Aufmerksamkeit bzw. Leistungsfähigkeit des Operators sehr schnell überfordert sein kann, in der genannten Druckschrift angesprochen wird, und dass diese Überforderung dann zur Verdrängung des Alertsignals führen kann, umfassen alle dort vorgeschlagenen Lösungsmittel eine Informationswiedergabe im Sichtfeld des Operators bzw. Bedieners und sind insoweit nicht geeignet, die der vorliegenden Erfindung zugrunde liegende Aufgabe zu lösen.

Eine erste vorteilhafte Ausgestaltung der Erfindung besteht darin, dass die erzeugten Wahrnehmbarkeitssignale gleichzeitig aus mehr als einer unterschiedlichen Art physikalischer Informationen (optisch, akustisch, tonisch) gebildet werden, so dass ein Alertsignal entsteht, welches mehr als ein Sinnesorgan des Operators anspricht. Durch diese Ausgestaltung wird erreicht, dass das Alertsignal der räumlichen und zeitlichen Struktur des realen Gefahrenpotentials angenähert ist. Die räumliche Einordnung eines außerhalb des Aufmerksamkeitsfeldes befindlichen Gefahrenpotentials kann durch die Überlagerung von physikalisch unterschiedlichen Wahrnehmbarkeitssignalen, etwa durch Überlagerung eines optischen und eines akustischen Wahrnehmbarkeitssignals entscheidend erhöht werden und somit dem Operator charakteristische Eigenschaften des realen Gefahrenpotentials, die er in seinem Erfahrungsschatz abgespeichert hat, vermitteln. Darüber hinaus bietet die gleichzeitige Verwendung unterschiedlicher physikalischer Wahrnehmbarkeitssignale den Vorteil, dass an die Anforderungen der Präzision der Darstellung der jeweiligen physikalischen Wahrnehmbarkeitssignale nur geringere Anforderungen gestellt zu werden brauchen.

Eine weitere Ausgestaltung der vorliegenden Erfindung, die in besonderer Weise geeignet ist, außerhalb des aktuellen Aufmerksamkeitsbereichs auftretende Gefahrenpotentiale an den Operator heranzuführen, besteht darin, dass die Wahrnehmbarkeitssignale den realen Umweltveränderungen angenähert nachgebildet werden, die die realen Objekte, von denen Gefahrenpotentiale ausgehen, in der Peripherie des Operators hervorrufen würden. Ein solches Wahrnehmbarkeitssignal kann im Fall der Anwendung der vorliegenden Erfindung auf das Führen eines Kraftfahrzeugs z. B. in der Weise erzeugt werden, dass ein seitlich im Bewegungsspielraum des zu führenden Kraftfahrzeugs eindringendes anderes Fahrzeug, wie z. B. ein überholendes Fahrzeug, das sich zunächst außerhalb des Aufmerksamkeitsfeldes des Fahrers befindet, durch Sensoren wahrgenommen wird und als Wahrnehmbarkeitssignale an den Berandungen der Windschutzscheibe jene flächigen Licht- und Schattenverteilungen künstlich erzeugt werden, die ein solches anderes Fahrzeug bei Nacht durch seine Scheinwerfer in dem vorgenannten peripheren Bereich der aktuellen Wahrnehmung des Fahrers erzeugen würde.

Eine weitere vorteilhafte Ausgestaltung erfährt die erfindungsgemäße Einrichtung dadurch, dass die Verarbeitung von Messgrößen eine Differenziation einschließt, so dass die Veränderungstendenz der Messgrößen von den Wahrnehmbarkeitssignalen wiedergegeben wird. Dadurch wird es möglich, Gefahrenpotentiale so rechtzeitig in die latente Aufmerksamkeit des Operators zu führen, dass dieser nach Verlagerung der Aufmerksamkeit ausreichend Zeit findet, die das Gefahrenpotential konkret wiedergebenden und vermittelnden Signaleinrichtungen zu beachten und entsprechend zu reagieren.
Die Differenziation kann dabei je nach der zu beachtenden Messgröße bzw. des physikalischen Parameters eine Differenziation nach der Zeit oder nach einer Wegstrecke oder einer sonstigen physikalischen Größe sein.

Eine weitere vorteilhafte Ausgestaltung der Erfindung besteht darin, dass die Verarbeitung der Messgrößen eine unstetige Änderung der Wahrnehmbarkeitssignale einschließt, sobald die Messgröße des Gefahrenpotentials einen vorgebbaren Maximalwert überschreitet. Die unstetige Änderung des Wahrnehmbarkeitssignals wird zur Folge haben, dass die Aufmerksamkeit vom Bereich des primären Zielobjekts abgelenkt und zu dem zu vermittelnden Gefahrenpotential hingelenkt wird, was in genau dieser Situation erwünscht ist, da sich die Priorität der steuernden Einflussnahme des Operators auf das Gerät oder die Maschine verschieben muss, um Schaden zu vermeiden. Solche unstetige Änderungen der Wahrnehmbarkeitssignale können Sprünge in Farb-, Helligkeits- oder Geräuschsignalen sein.

Weiterhin ist es besonders vorteilhaft, wenn die Wahrnehmbarkeitssignale analog der räumlichen Veränderung des Gefahrenpotentials mit veränderlicher Position erzeugt werden.

Die Verarbeitung der Messgrößen soll vorteilhaft eine Abschwächung der erfassten physikalischen Parameter in dem Maß einschließen, dass das bewusste Aufmerksamkeitspotential des Operators nicht gestört wird. Auf diese Weise wird die Aufmerksamkeit des Operators im Bereich von primären Zielobjekten gehalten und die ergänzende Information bleibt als latent repräsentierte Information vorhanden.

Die erfindungsgemäße Einrichtung ist für die Bedienung vieler Arten unterschiedlicher technischer Gerätschaften und Maschinen einsetzbar, wie z.B. zur Steuerung von Kraftmaschinen in gewünschten Betriebsbereichen ohne Gefährdung der Maschine selbst und zwar abhängig von Maschinenparametern oder auch abhängig von äußeren sich dynamisch ändernden Umgebungsparametern. Besonders vorteilhaft erweist sich die erfindungsgemäße Einrichtung dann, wenn die Maschine ein Kraftfahrzeug, der Operator der Fahrzeugführer und das Gefahrenpotential ein überholendes oder sich in andrer Weise annäherndes Fahrzeug ist, wobei die Position des überholenden oder sich annähernden Fahrzeugs, beginnend mit der Annäherungsphase und endend mit der Entfernungsphase (nach dem Überholvorgang) durch ein in den Bereich des Instrumententrägers des Fahrzeugs transferiertes optischen Signal wiedergegeben wird. Eine solche erfindungsgemäße Ausgestaltung lässt das primäre Aufmerksamkeitsfeld des Fahrzeugführers, welches im wesentlichen das nach vorne auf die Fahrbahn gerichtete Blickfeld umfasst, so lange weitestgehend unbeeinträchtigt, als das ihm von dem überholenden Fahrzeug vermittelte optische Signal im latent untergeordneten Bereich verbleit. Dennoch wird das sich außerhalb des primären Aufmerksamkeitsfeldes befindliche überholende Fahrzeug durch das optische Signal latent wahrgenommen.

Wird, entsprechend einer weiteren Ausgestaltung der Erfindung analog zur Differenzgeschwindigkeit der beiden Fahrzeuge und/oder abhängig von der absoluten Geschwindigkeit des überholten Fahrzeugs die Intensität des transferierten optischen Signals nach Helligkeit, Ausdehnung oder Farbe variiert, so kann dadurch das Aufmerksamkeitspotential in gewünschter Weise intensiviert werden. Dies kann, wie oben beschrieben, auch unstetig erfolgen, womit dann die Aufmerksamkeit des Fahrers von einer latenten Aufmerksamkeit ("Habt acht"-Stituation) in das primäre Aufmerksamkeitsfenster verlagert würde, d. h. der Fahrer durch Blick in den Rückspiegel seines Fahrzeugs zur Beobachtung des überholenden Fahrzeugs und, falls erforderlich, zur entsprechenden Reaktion veranlasst werden würde.

Noch im Rahmen der untergeordneten latenten Repräsentation des überholenden Fahrzeugs kann das Signal analog der relativen Bewegung der Fahrzeuge zueinander als wanderndes Signal wiedergegeben werden, wobei gemäß einer weiteren bevorzugten Ausführungsform der Erfindung der Pfad, auf dem das optische Signal wandert, eine den Instrumententräger des Fahrzeugs rahmenartig umgebende Leuchtvorrichtung ist.

Die Position des leuchtenden Bereichs, dessen Helligkeit, Ausdehnung und Farbe entlang des vorgegebenen Bewegungspfades kann so gestaltet werden, dass die abhängig von der Differenzgeschwindigkeit beider Fahrzeug und/oder abhängig von der absoluten Geschwindigkeit des überholten Fahrzeugs dem tatsächlichen Bewegungsablauf der beiden Fahrzeuge zueinander ausreichend vorauseilt, um die erforderliche Aufmerksamkeit des Fahrers für einen Blick in den üblicherweise vorhandenen Rückspiegel zu lenken und damit die volle Aufmerksamkeit des Fahrers und dessen bewusste Reaktion zu veranlassen. Durch die an der äußeren Grenze des primären Aufmerksamkeitsfeldes entlanggeführte latente Repräsentation des überholenden oder sich annähernden Fahrzeugs wird die einfache Zuordenbarkeit zwischen dem optischen Signal und dem am Rand oder außerhalb des Aufmerksamkeitsfeldes real sichtbaren überholenden Fahrzeug gewährleistet. Schließlich können durch diese Einrichtung mehrere, sich in der Umgebung befindende und als Gefahrenpotentiale anzusehende Fahrzeuge gleichzeitig dargestellt werden und latent richtig identifiziert werden.

Nach einer weiteren Ausführungsform der Erfindung soll die Position des überholenden Fahrzeugs, beginnend mit der Annäherungsphase und endend mit der Entfernungsphase (nach dem Überholvorgang) durch ein in den Hörbereich des Fahrers transferiertes akustisches Signal wiedergegeben werden. Auch dabei können die akustischen Wahrnehmbarkeitssignale analog der räumlichen Veränderung des überholenden Fahrzeugs mit veränderlicher Position erzeugt werden, was vorzugsweise dadurch erfolgt, dass das andere, überholende Fahrzeug durch außen am Kraftfahrzeug angeordnete Richtmikrophone erfasst und die akustischen Signale durch im Innenraum des Kraftfahrzeugs angeordnete Lautsprecher wiedergegeben werden. Vorteilhafterweise wird dann analog der räumlichen Position des überholenden Fahrzeugs zum überholten Kraftfahrzeug der Geräuschpegel durch Steuerung des von den Lautsprechern wiedergegebenen Geräuschpegels transferiert.

Eine weitere Ausführungsform der Erfindung ist dadurch gekennzeichnet, dass die Position des überholenden Fahrzeugs beginnend mit der Annäherungsphase und endend mit der Entfernungsphase (nach dem Überholvorgang) durch Übertragung von Steuerungssignale in das Lenkrad des Kraftfahrzeugs transferiert und dort als tonisches Signal wiedergegeben wird. Bevorzugt soll dabei der Lenkradkranz in Teilen seines Umfangs in seinem Querschnitt veränderbar sein und abhängig von der räumlichen Position des überholenden Fahrzeugs zum überholten Kraftfahrzeug die Querschnittsänderung am Lenkradkranz gesteuert werden.

Bei einer weiteren Ausführungsform einer erfindungsgemäßen Einrichtung sind als Wahrnehmbarkeitssignale, die an den Rand des Aufmerksamkeitsfeldes des Fahrers eines Kraftfahrzeugs transferiert werden, die Steifigkeit bzw. der Gegendruck des Fahrersitzes einzusetzen. Dies kann dadurch erfolgen, dass durch steuerbare Viskosität eines Fluids in Abhängigkeit der erfassten Messgrößen des Gefahrenpotentials die Steifigkeit bzw. der Druck im Fahrersitz erhöht oder erniedrigt wird.

Schließlich kann in weiterer Ausgestaltung der Erfindung vorgesehen sein, dass die Repräsentation des variierenden Gefahrenpotentials zwei oder mehrere voneinander unabhängige Teilgefahrenpotentiale umfasst, für die jeweils ein charakteristisches Wahrnehmbarkeitssignal oder eine charakteristische Gruppe von Wahrnehmbarkeitssignalen erzeugt wird. Befinden sich z. B. mehrere voneinander unabhängige Objekte außerhalb des Aufmerksamkeitsfokus des Operators, bezogen auf den Anwendungsfall des Kraftfahrzeugs, beispielsweise auf ein Fahrzeug im toten Winkel und zusätzlich eine scharfe Kurve in Fahrtrichtung, die von einem vorausfahrenden Fahrzeug verdeckt wird, so können diese beiden, dem Fahrer nicht erkennbaren Gefahrenpotentiale, durch je ein Wahrnehmbarkeitssignal in der Weise repräsentiert werden, dass die Aufmerksamkeit auf beide Komponenten gleichzeitig gerichtet werden kann. Dies erfolgt dann dadurch, dass zur Aufmerksamkeitslenkung unterschiedliche Signale zur Repräsentation herangezogen werden, die als dominante Eigenschaft dem jeweiligen Potential am ehesten zugeordnet werden können. So könnte z. B. für das Gefahrenpotential "scharfe Kurve" ein dem Reifengeräusch beim schnellen Durchfahren der Kurve ähnliches Geräusch erzeugt werden und für das Gefahrenpotential des im toten Winkel fahrenden Fahrzeugs, wie weiter oben bereits angedeutet, eine Licht- und Schattenverteilung, möglicherweise zusätzlich ein akustisches seitenrichtiges Rauschen, wie es dem beim realen Überholvorgang eines Fahrzeugs entspricht.

Anhand der beigefügten Zeichnungen werden Ausführungsbeispiele der erfindungsgemäßen Einrichtung erläutert. In den Zeichnungen zeigt
- Fig. 1: die schematische Draufsicht auf zwei sich auf einer Fahrbahn annähernde Kraftfahrzeuge F1, F2, von denen das Kraftfahrzeug F1 mit einer erfindungsgemäßen Einrichtung zur Repräsentation des Fahrzeugs F2 ausgestattet ist,
- Fig. 2: eine schematische Draufsicht auf den Fahrerplatz des Kraftfahrzeugs F1 aus Fig. 1 mit einer optischen Signaleinrichtung am Instrumententräger
- Fig. 3: das sich dem Fahrer des Kraftfahrzeugs F1 bietende Blickfeld auf die vor ihm liegende Fahrbahn und den erfindungsgemäß gestalteten Instrumententräger des Kraftfahrzeugs schematisch,
- Fig. 4: eine schematische Draufsicht auf den Fahrerplatz eines Kraftfahrzeugs F1 mit akustischen Repräsentation eines überholenden Fahrzeugs,
- Fig. 5: das Lenkrad eines Kraftfahrzeugs, dessen Lenkradkranz erfindungsgemäß in Teilen seines Umfangs im Querschnitt veränderbar ist und
- Fig. 5a: einen Querschnitt entsprechend der Linie A-A aus Fig. 5 vergrößert.

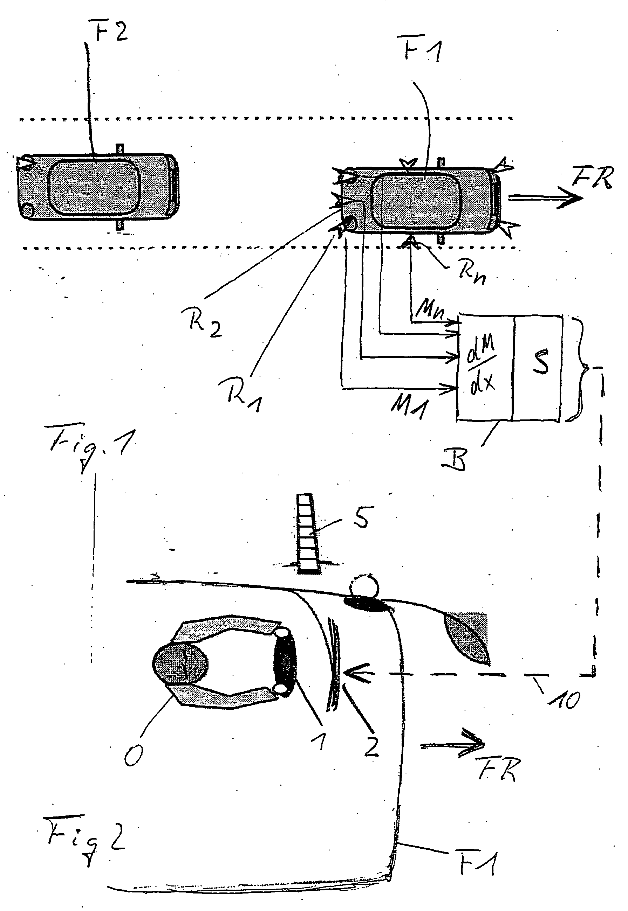

In der schematischen Draufsicht nach Fig. 1 ist ein erstes Kraftfahrzeug F1 dargestellt, das sich in Fahrtrichtung FR auf einer Fahrbahn bewegt. Diesem Kraftfahrzeug F1 nähert sich ein zweites Fahrzeug F2 von hinten an. Durch am Kraftfahrzeug F1 außen angeordnete Richtsensoren R1 bis Rn sind physikalische Parameter des Fahrzeugs F2 (wie z. B. Annäherungsgeschwindigkeit oder Position) erfassbar und über Signalleitungen als Messgrößen M1 bis Mn einem Steuergerät B zuführbar. Die Messgrößen werden im Steuergerät B zu Wahrnehmbarkeitssignalen S verarbeitet und über geeignete Signalleitungen 10 in den Bereich eines Instrumententrägers 2 des Kraftfahrzeugs F1 transferiert und dort als optisches Signal 4 wiedergegeben (vergl. Fig. 2).

Die in Fig. 2 gezeigte schematische Draufsicht auf den Fahrerplatz des Kraftfahrzeugs F1 aus Fig. 1 zeigt den Fahrer O mit dem Lenkrad 1 und einem Rückspiegel 5. In dem in Fig. 3 schematisch dargestellten Blickfeld des Fahrers O des Kraftfahrzeugs F1 ist das Lenkrad 1, der Instrumententräger 2, der Rückspiegel 5 und eine den Instrumententräger 2 rahmenartig umgebende Leuchtvorrichtung 3 gezeigt. Das primäre Aufmerksamkeitsfeld AF des Fahrers ist mit konzentrischen Kreisen angedeutet und liegt in Fahrtrichtung oberhalb des Lenkrades 1 auf der vor dem Fahrer sich erstreckenden Fahrbahn. Die rahmenartige Leuchtvorrichtung 3 soll derart ausgebildet sein, dass ein leuchtender Bereich 4 erzeugt werden kann, der nach Helligkeit, Ausdehnung und Farbe variiert und dessen Position in Abhängigkeit von den erfassten Messgrößen M1 bis Mn und den dadurch übertragenen Signalen S entsprechend der Position des Fahrzeugs F2 seine Position ändert von einer Ausgangslage 4.1 über 4.2, 4.3 in Richtung 4.4. Abhängig von den durch die Richtsensoren aufgenommenen Signalen des Fahrzeugs F2 erfolgt die Wanderung des leuchtenden Bereichs 4 durch die Positionen 4.1 bis 4.4 analog der relativen Position des Fahrzeugs F2 zum Kraftfahrzeug F1. Die Helligkeit, Ausdehnung und Farbe des leuchtenden Bereiches 4 kann dabei z. B. von der Differenzgeschwindigkeit beider Fahrzeuge abhängig gemacht werden oder auch von der absoluten Geschwindigkeit des Kraftfahrzeugs F1, um dadurch die Höhe des tatsächlich vorliegenden Gefahrenpotentials durch das Fahrzeug F2 wiederzugeben. In gleicher Weise, wie ein sich annäherndes bzw. überholendes Fahrzeug F2 durch die Wanderung des leuchtenden Bereichs 4 von der Position 4.1 bis 4.4 an den Rand des Aufmerksamkeitsfeldes des Fahrers herangeführt wird, ist durch die auf der rechten Seite des Kraftfahrzeugs F1 angeordneten Richtsensoren R (z. B. Richtmikrophone oder Video- oder Radaranalysatoren) ein auf der rechten Seite sich annäherndes anderes Fahrzeug analog repräsentierbar und als latente Information auf der rechten Seite der rahmenartigen Leuchtvorrichtung 3 wiedergebbar.

Eine der dargestellten Leuchtvorrichtung 3 entsprechende optische Warneinrichtung kann auch weiter entfernt vom Instrumententräger verwirklicht werden,; z. B. an Teilen des Dachhimmels und/oder der sogenannten A-Säulen des Kraftfahrzeugs.

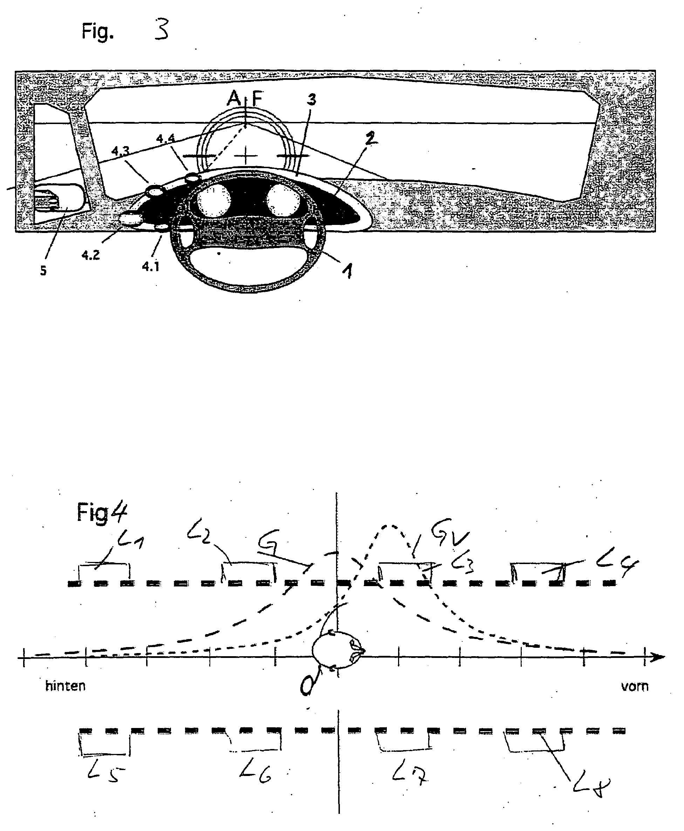

Die in Fig. 4 dargestellte schematische Draufsicht auf den Fahrerplatz des Kraftfahrzeugs veranschaulicht eine Ausführungsform der erfindungsgemäßen Einrichtung mit akustischer Repräsentation eines überholenden oder sich annähernden Fahrzeugs. Dem in der Mitte der Figur dargestellten Fahrer O werden durch auf beiden Seiten im Innenraum des Kraftfahrzeugs F1 angeordnete Lautsprecher L1 bis L4 auf der linken Fahrzeugseite und L5 bis L8 auf der rechten Fahrzeugseite ein analoger Geräuschpegel eines sich dem Kraftfahrzeug F1 von hinten annähernden Fahrzeugs F2 übermittelt. Der Signalfluss erfolgt dabei wie in den Fig. 1 und 2 dargestellt, wobei lediglich anstelle der dem Fahrer dann vermittelten optischen Signale die durch die Lautsprecher L1 bis L8 vermittelten akustischen Signale transferiert werden. Die akustische Repräsentation eines überholenden Fahrzeugs F2 erfolgt durch einen synthetisch von den Lautsprechern L1 bis L8 erzeugten Geräuschpegel G, wobei in der Fig. 4 zwei Möglichkeiten angedeutet sind, diesen Geräuschpegel des überholenden Fahrzeugs durch die Lautsprecher zu repräsentieren. Der mit G bezeichnete, den Geräuschpegel wiedergebende Linienzug repräsentiert die Echtzeitposition des überholenden Fahrzeugs F2, während der Linienzug GV einen Geräuschpegel wiedergibt, der der tatsächlichen Position des überholenden Fahrzeugs vorverlagert ist und dadurch erhalten wird, dass in dem Steuergerät B eine Differenziation der dort erfassten Messgrößen nach der Zeit stattgefunden hat (vergl. Fig. 1). Zusätzlich zu einer zeitlichen Vorverlagerung des Geräuschpegels durch Differenziation kann im Steuergerät auch eine Erhöhung der Lautstärke generiert werden. In jedem Fall wird durch die akustische Repräsentation eines überholenden Fahrzeugs ein für den Fahrer optisch nicht erkennnbares Fahrzeug wahrnehmbar, wobei diese Wahrnehmbarkeit so lange nur latent erfolgen soll, als das durch das sich annähernde Fahrzeug geschaffene Gefahrenpotential unterhalb eines vorherbestimmten Grenzwertes bleibt.

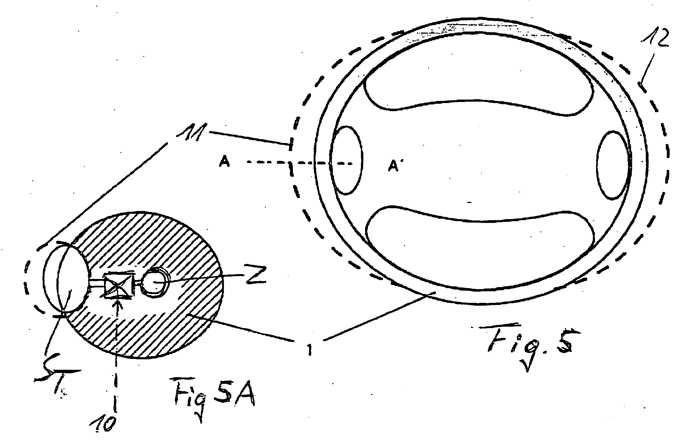

Das in Fig. 5 schematisch gezeigte Lenkrad eines Kraftfahrzeugs soll ein solches sein, dessen Lenkradkranz in Teilen seines Umfangs im Querschnitt veränderbar ist und mit dem eine erfindungsgemäße Einrichtung nach den Merkmalen der Patentansprüche 16, 17 ausführbar ist. Der vergrößerte Querschnitt des Lenkradkranzes nach Fig. 5a zeigt eine Signalleitung 10 entsprechend der Signalleitung 10 in den Fig. 1 und 2. Durch die Signalleitung 10 wird ein Fluidventil im Inneren des Lenkradkranzes angesteuert, um aus einer zentralen Fluidleitung Z Fluiddruck in Teilen 11, 12 des Lenkradkranzes aufzubauen. Der unterschiedliche Fluiddruck in den entsprechenden Teilen 11, 12 des Lenkradkranzes ist vom Fahrer als tonische Signal ST wahrnehmbar. Die Steuerung durch die Signalleitung 10 erfolgt, wie oben geschildert, in Anhängigkeit des Gefahrenpotentials, das als tonisches Signal repräsentiert werden soll.

## Patentansprüche

1. Einrichtung zur Repräsentation eines zeitlich und räumlich variierenden Gefahrenpotentials für den ein technisches Gerät oder eine Maschine bedienenden Operator, insbesondere für den Führer eines Kraftfahrzeugs, **dadurch gekennzeichnet**,
a) dass Messgrößen (M1-Mn) von physikalischen Parametern (A) (Schall, Bewegungsgröße, Leuchtstärke) eines außerhalb des aktuellen Aufmerksamkeitsbereiches des Operators auftretenden Gefahrenpotentials erfasst werden,
b) dass diese Messgrößen verarbeitet werden zu Wahrnehmbarkeitssignalen (optisch, akustisch, tonisch), welche als Alert-Signal zur Lenkung der Aufmerksamkeit des Operators (0) in Richtung des Gefahrenpotentials geeignet sind,
c) dass die Wahrnehmbarkeitssignale in die Nähe oder an den Rand des Aufmerksamkeitsfeldes (AF) des Operators (O) unter vorgebbarer Veränderung ihrer realen räumlichen und/oder zeitlichen Position transferiert werden.

2. Einrichtung nach Anspruch 1, **dadurch gekennzeichnet, dass** die erzeugten Wahrnehmbarkeitssignale gleichzeitig aus mehr als einer unterschiedlichen Art physikalischer Informationen (optisch, akustisch, tonisch) gebildet werden, so dass ein Alertsignal entsteht, welches mehr als ein Sinnesorgan des Operators anspricht.

3. Einrichtung nach den Ansprüchen 1 oder 2, **dadurch gekennzeichnet, dass** die Wahrnehmbarkeitssignale den realen Umweltveränderungen angenähert nachgebildet werden, die die realen Objekte, von denen Gefahrenpotentiale ausgehen, in der Peripherie des Operators hervorrufen würden.

4. Einrichtung nach den Ansprüchen 1 bis 3, **dadurch gekennzeichnet, dass** die Verarbeitung der Messgrößen (M) ein Differenziation (dM/dx) einschließt, so dass die Veränderungstendenz der Messgrößen von den Wahrnehmbarkeitssignalen wiedergegeben wird.

5. Einrichtung nach den Ansprüchen 1 bis 4, **dadurch gekennzeichnet, dass** die Verarbeitung eine unstetige Änderung der Wahrnehmbarkeitssignale einschließt, sobald die Messgröße des Gefahrenpotentials einen vorgebbaren Maximalwert überschreitet.

6. Einrichtung nach den Ansprüchen 1 bis 5, **dadurch gekennzeichnet, dass** die Wahrnehmbarkeitssignale analog der räumlichen Veränderung des Gefahrenpotentials mit veränderlicher Position (4.1 - 4.4) erzeugt werden.

7. Einrichtung nach den Ansprüchen 1 bis 5, **dadurch gekennzeichnet, dass** die Verarbeitung der Messgrößen eine Abschwächung der erfassten physikalischen Parameter in dem Maß einschließt, dass das bewusste Aufmerksamkeitspotential des Operators nicht gestört wird.

8. Einrichtung nach einem oder mehreren der vorhergehenden Ansprüche, wobei die Maschine ein Kraftfahrzeug (F1), der Operator (O) der Fahrzeugführer und das Gefahrenpotential ein überholendes Fahrzeug (F2) ist, **dadurch gekennzeichnet, dass** die Position des überholenden Fahrzeugs (F2), beginnend mit der Annäherungsphase und endend mit der Entfernungsphase (nach dem Überholvorgang) durch ein in den Bereich des Instrumententrägers (2) des Kraftfahrzeugs (F1) transferiertes optisches Signal (4) wiedergegeben wird.

9. Einrichtung nach einem oder meheren der vorhergehenden Ansprüche, wobei die Maschine ein Kraftfahrzeug (F1), der Operator (O) der Fahrzeugführer und das Gefahrenpotential für die Fortsetzung des Bewegungszustandes des Kraftfahrzeugs (F1) ein ruhendes oder bewegtes Objekt ist, **dadurch gekennzeichnet, dass** dieses Objekt durch ein an den Rand des Sichtfeldes des Fahrers transferiertes weiteres optisches Signal wiedergegeben wird.

10. Einrichtung nach Anspruch 8 oder 9, **dadurch gekennzeichnet, dass** analog zur Differenzgeschwindigkeit der beiden Fahrzeug bzw. zum ruhenden oder bewegten Objekt und/oder abhängig von der absoluten Geschwindigkeit des überholten Fahrzeugs die Intensität des transferierten optischen Signals (4) nach Helligkeit, Ausdehnung oder Farbe variiert wird.

11. Einrichtung nach Anspruch 9 oder 10, **dadurch gekennzeichnet, dass** das Signal (4) analog der relativen Bewegung der Fahrzeuge zueinander wandert.

12. Einrichtung nach den Ansprüchen 8 bis 11, **dadurch gekennzeichnet, dass** der Pfad auf dem das optische Signal wandert eine den Instrumententräger (2) des Fahrzeugs (F1) rahmenartig umgebende Leuchtvorrichtung (3) ist.

13. Einrichtung nach einem oder mehreren der vorhergehenden Ansprüche, wobei die Maschine ein Kraftfahrzeug (F1), der Operator (O) der Fahrzeugführer und das Gefahrenpotential ein überholendes Fahrzeug (F2) ist, **dadurch gekennzeichnet, dass** die Position des überholenden Fahrzeugs (F2), beginnend mit der Annäherungsphase und endend mit der Entfernungsphase (nach dem Überholvorgang) durch ein in den Hörbereich des Fahrers transferiertes akustisches Signal wiedergegeben wird.

14. Einrichtung nach einem oder mehreren der vorhergehenden Ansprüche, **dadurch gekennzeichnet**, das das Gefahrenpotential durch außen am Kraftfahrzeug angeordnete Richtmikrophone (R1 - Rn) erfasst und die akustischen Signale durch im Innenraum des Kraftfahrzeugs angeordnete Lautsprecher (L1 - L8) wiedergegeben werden.

15. Einrichtung nach einem oder mehreren der vorhergehenden Ansprüche, **dadurch gekennzeichnet, dass** analog der räumlichen Position des überholenden Fahrzeugs (F2) zum überholten Kraftfahrzeug (F1) der Geräuschpegel durch Steuerung des von den Lautsprechern wiedergegebenen Geräuschpegels (G) nach Intensität und/oder Klang modifiziert wird.

16. Einrichtung nach einem oder mehreren der vorhergehenden Ansprüche, wobei die Maschine ein Kraftfahrzeug, der Operator der Fahrzeugführer und das Gefahrenpotential ein überholendes Fahrzeug ist, **dadurch gekennzeichnet, dass** die Position des überholenden Fahrzeugs, beginnend mit der Annäherungsphase und endend mit der Entfernungsphase (nach dem Überholvorgang) in das Lenkrad (1) des Kraftfahrzeugs (F1) transferiert und dort als tonisches Signal (ST) wiedergegeben wird.

17. Einrichtung nach Anspruch 16 **dadurch gekennzeichnet, dass** der Lenkradkranz in Teilen (11, 12) seines Umfangs in seinem Querschnitt veränderbar ist und abhängig von der räumlichen Position des überholenden Fahrzeugs (F2) zum überholten Fahrzeug (F1) die Querschnittsänderung am Lenkradkranz gesteuert wird.

18. Einrichtung nach einem oder mehreren der vorhergehenden Ansprüche, **dadurch gekennzeichnet, dass** als Wahrnehmbarkeitssginale, die in das oder an den Rand des Aufmerksamkeitsfeldes des Fahrers eines Kraftfahrzeugs transferiert werden, die Steifigkeit bzw. der Gegendruck des Fahrersitzes eingesetzt werden.

19. Einrichtung nach den Ansprüchen 1 bis 18, **dadurch gekennzeichnet, dass** die Repräsentation der Wahrnehmbarkeitssignale den vorab ermittelten individuellen Wahrnehmungsfähigkeiten des Operators angepasst wird.

20. Einrichtung nach den Ansprüchen 1 bis 19, **dadurch gekennzeichnet, dass** das Gefahrenpotential zwei oder mehrere räumlich unabhängige Teilgefahrenpotentiale umfasst für die jeweils ein charakteristisches Wahrnehmbarkeitssignal oder eine charakteristische Gruppe von Wahrnehmbarkeitssignalen erzeugt werden.
